# EUROPEAN PATENT SPECIFICATION

(11) **EP 2 505 900 B1**
(45) Date of publication and mention of the grant of the patent: **14.05.2014**
(21) Application number: 12162694.9
(22) Date of filing: 30.03.2012
(51) Int. Cl.: F16L 41/00, G01L 19/00, G01D 11/24, F16L 37/04

(54) **Sensor housing and latching mechanism for sensor housing**
Sensorgehäuse und Verriegelungsmechanismus für das Sensorgehäuse
Boîtier de capteur et mécanisme de verrouillage de boîtier de capteur

(30) Priority: 01.04.2011 US 201161470838 P; 23.03.2012 US 201213428398
(43) Date of publication of application: 03.10.2012
(73) Proprietor: TI Group Automotive Systems, L.L.C., Auburn Hills, MI 48326 (US)
(72) Inventor: Gunderson, Stephen H., Marine City, Michigan, MI Michigan 48039 (US); Kerin, Jim, Gross Pointe Woods, Michigan, MI Michigan 48236 (US); Pepe, Richard M., Macomb, Michigan, MI Michigan 48044 (US)
(74) Representative: Rohmann, Michael

(56) References cited:
- EP-A2- 1 562 030
- WO-A2-2007/106749
- DE-U1-202006 016 186
- US-A1- 2009 126 694

## Description

### BACKGROUND

This invention relates to fluid systems such as those incorporating quick connectors to connect a rigid tube to a flexible hose or other system component. More particularly, it relates to a quick connector or other system element that includes a removable component housing mechanism for sensing conditions within the system.

Quick connectors are commonly used to provide a permanent but severable connection between a rigid tube and a flexible hose or other component. Such connections are illustrated in U.S. Pat. Nos. 5,161,832; 5,324,082; 5,423,577; 5, 586, 792; 5, 626, 371; 5, 628, 531; 5, 863, 077; 6, 846, 021; 7,390,025; and 7,503,784.

Especially relevant connectors are disclosed in patent publications DE 20 2006 016, WO 2007/106749, US 2009/0126694 and EP 1 562 030.

Such quick connectors have wide application, but are particularly useful in vehicular fuel systems. Many such connectors are employed in the liquid and/or vapor lines that comprise the fuel system of modern automobile vehicles.

Evolution of modern day engine operation diagnostics and control has presented the need for monitoring operating conditions within the fuel system. Parameters such as fuel or vapor pressure, vacuum, temperature and the like must be sensed to provide inputs necessary to the diagnostic or control function. Introduction of separate sensing elements has multiplied the number of components within a given system and has added to the number of connections or possible leakage paths within a system. Alternatively, addition of sensing elements to components such as the fuel tank flange has complicated design requirements and increased cost.

The exemplary device of the present invention provides a quick connector according to claim 1.

In the embodiments disclosed in claims 1 to 5, a sensor, which can be attached to the connector body, measures a value of the parameter being sensed and provides a signal indicative of the value. A receptacle receives an electrical plug that connects the sensor to signal receiving and processing circuitry.

While the device of the present disclosure is shown in association with a fluid system quick connector, it has application to any element of a fluid system such as a fluid manifold, housing, vessel or other device.

### BRIEF DESCRIPTION OF THE DRAWINGS

- FIG. 1: is a perspective view of an assembly of a quick connector with a removable sensor housing;
- FIG. 2: is a perspective view of the quick connector body of FIG. 1;
- FIG. 3: is an exploded sectional view of the assembly of FIG. 1 with a primary retainer, a secondary retainer, and a male member associated with the quick connector;
- FIG. 4: is a perspective view of the sensor housing of the assembly shown in FIG. 1;
- FIG. 5: is a perspective view, partially in section, showing the retainer for the sensor housing for the quick connector of FIG. 1;
- FIG. 6: is a perspective view of the retainer shown in FIG. 5;
- FIG. 7: is a front view of the retainer shown in FIG. 5;
- FIG. 8: is a side view of the retainer shown in FIG. 5;
- FIG. 9: is a rear view of the retainer shown in FIG. 5;
- FIG. 10: is a partial sectional view of the sensor housing coupling arrangement for the assembly of FIG. 1;
- FIG. 11: is a partial sectional view of the sensor housing coupling arrangement of FIG. 1, with the retainer in the released position;
- FIG. 12: is a sectional view of the assembly of FIG. 1 showing an alternative embodiment of the sensor housing;
- FIG. 13: is a sectional view of a modified assembly of a quick connector and removable sensor housing illustrative of the principles of the present disclosure;
- FIG. 14: is a perspective view of the quick connector body of the assembly of FIG. 13;
- FIG. 15: is a side view of the removable sensor housing of the assembly of FIG. 13; and
- FIG. 16: is a perspective view of the assembly of FIG. 13 illustrating the attachment of the sensor housing to the quick connector housing.

### DETAILED DESCRIPTION

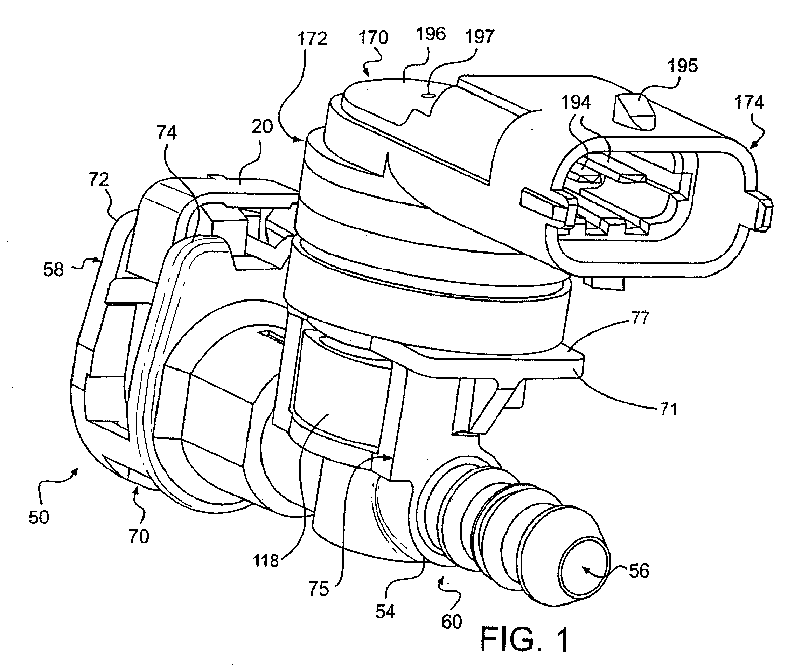

FIG. 1 through 11 illustrate a quick connector for a fluid system with an attached sensor housing which may house a variety of mechanisms suitable to recognize operational parameters of the fluid system. In its broadest aspect, the present disclosure is applicable to any element of a fluid system to which it is deemed desirable to attach a sensing mechanism contained within a housing.

The sensor housing can removably attach to a mating portion on another structure, such as a quick connector body in a fuel line. An attachment mechanism may be used to secure the sensor housing to the mating portion. The sensor housing attaches to the mating portion in a manner that prevents fluid leakage. The sensor disposed within the sensor housing can be any suitable sensor, such as a liquid pressure sensor or temperature sensor.

Turning to FIGS. 1-3, there is illustrated a connector body 50 of a quick connector coupling. For purposes of illustrating the principles of the invention, a connector body such as that disclosed in U.S. Pat. Nos. 5,586,792 and 7,503,784, would be suitable.

For example, the disclosure of U.S. Pat. No. 5,586,792 describes the connector and fluid system components including the rigid tube and flexible hose. The following description describes the additions and modifications to the quick connector body similar to that shown in U.S. Pat. No. 5,586,792 that embody the present invention. The invention, however, is suitable for incorporation into any of the quick connectors previously identified, as well as numerous other quick connector configurations known in the art. In addition, the sensor housing is suitable for removable attachment to any other suitable structure for taking a sensor measurement.

Specifically, FIGS. 1-3 illustrate an embodiment of a connector body 50. The connector body 50 is a generally cylindrical elongate structure which can be molded of a polymeric material such as nylon-12. The connector body 50 can include a wall 54 defining a throughbore 56 that extends from a large diameter male member reception end 58 to a barbed stem or hose connection end 60.

The barbs coact with an attached flexible hose in a well-known manner to releasably retain a flexible hose on end 60. Numerous other end configurations are possible depending on the components employed in the fluid system. For example, the end 60 could be configured to be secured to a non-flexible line or a rigid line with, or without, an O-ring seal employed between the end 60 and the attached line. The connection could be secured in any suitable manner, such as by crimping, magna-forming or the like.

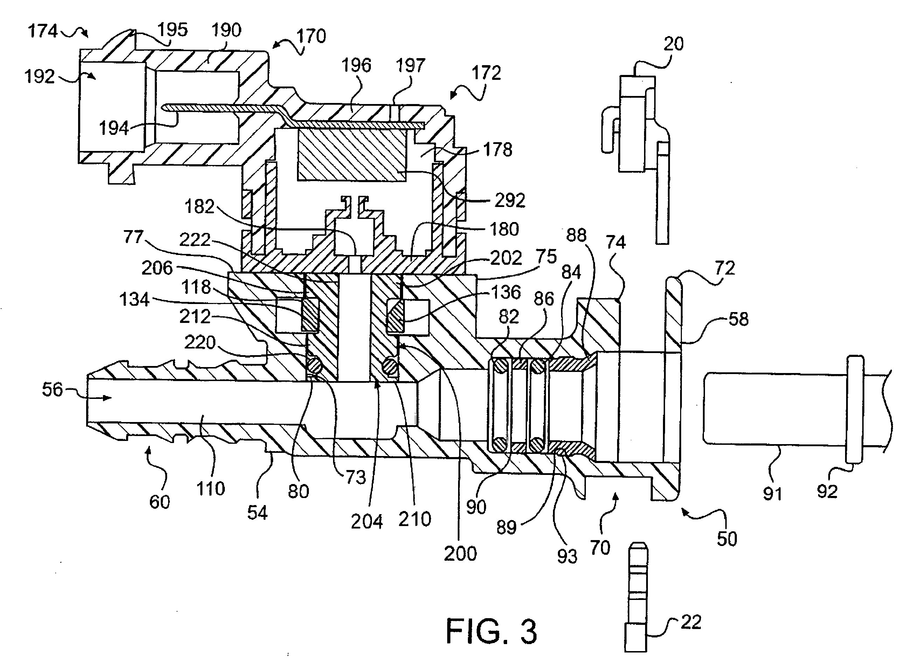

Referring to FIG. 3, variations in the diameter of the interior bore 56 divide the interior bore 56 into a fluid passageway portion 110 and a seal receiving portion 90. Fluid passageway portion 110 communicates with the attached hose. Seal receiving portion 90 houses one or more O-ring seals 82, 84 and spacers 86 to provide a fluid tight relationship with an inserted rigid tube 91. The spacer 86 can be disposed between the O-ring seals 82, 84. As shown, the O-ring seals 82, 84 and spacer 86 can be retained within the connector body 50 using a retainer 88. The retainer 88 can have a ridge 89 that is received by and can snap-fit into a groove 93 formed in the seal receiving portion 90.

The body 50 further includes a retainer housing section 70 adjacent male member reception end 58. The retainer housing section 70 includes an outer annular rim 72 and inner annular rim 74 spaced apart from one another. A generally "U" shaped tube retainer 22 resides between the rims 72 and 74 and receives the rigid tube 91 in a well-known manner to releasably retain the rigid tube 91 within the connector body with an upset 92 on the tube 91 captured against removal by the retainer 22. A secondary latch/verifier 20 can also reside between rims 72 and 74, which verifies the complete insertion of tube 91 and capture of upset 92 to secure the rigid tube 91.

Referring to FIGS. 1 and 3, the connector body 50 can receive a sensor housing generally designated 170 that is removably connected to connector body 50.

The connector body 50 includes a wall 71 defining a planar support surface 77 to receive the sensor housing 170. It includes a bore 80 extending into the body from planar support surface 77 defining cylindrical wall surface 73. Bore 80 is in fluid communication with fluid passageway 110. The bore 80 can be sized to receive the removable sensor housing 170 in fluid tight relation as will be explained. The bore 80 may be any suitable shape and/or size, and can include an asymmetric counterbore 79 adjacent planar support surface 77 to assist with proper alignment of the sensor housing 170 relative to connector body 50 and prevention of rotation of the connected components.

Sensor housing 170 includes a sensor cavity defining portion 172 and a receptacle portion 174. As shown, the receptacle portion 174 can be disposed generally parallel to the longitudinal axis of the throughbore 56 defined by wall 54 of body 50. However, it will be appreciated that the receptacle portion 174 could be oriented in any desired relation relative to the length of bore 56.

As shown in FIG. 3, the cavity defining portion 172 of sensor housing 170 defines an accessory chamber 178 to receive a sensor or other device discussed in greater detail below. Cavity defining portion 172 includes a bottom wall 180 defining a planar mating surface 181 from which depends cylindrical shaft 200 defining passageway 222. Bottom wall 180 can include a bore or passageway 182 in communication with throughbore 56 of connector body 50 through passageway 222. The chamber 178 can thus be in fluid communication with the fluid within fluid passageway 110 of throughbore 56 of connector body 50.

Receptacle portion 174 of sensor housing 170 can include wall 190 extending from the cavity defining portion 172 of housing 170. Wall 190 defines a hollow plug receiving chamber 192. Electrically conductive prongs or blades 194 are imbedded in the wall 190 in fluid tight relation and extend into chamber 178. The ends of the prongs 194 can be exposed within chamber 178 and include contacts for contacting the circuitry of a sensor or other device.

A lug 195 can be provided on the exterior of wall 190. The lug 195 is configured to engage an insertable plug (not shown) associated with sensor monitoring and data processing devices. The lug 195 releasably retains the plug within hollow plug receiving chamber 192. Suitable contacts within the plug complete the circuit through contact with prongs 194.

As best seen in FIG. 3, wall 196 can include a port 197 that communicates between the surrounding atmosphere and the interior of chamber 178. This port 197 can provide access to a reference source of surrounding ambient atmosphere. A sensor 292 disposed in the chamber 178 can provide a comparative signal based on the difference between the condition sensed in the fluid system and the corresponding parameter in the surrounding atmosphere. The port 19 can be isolated from the port 182 to retain the fluid tight integrity of the fluid in the fluid passageway portion 110 of throughbore 56 of the connector body 50.

The sensor 292 may be any sensor suitable for the sensing function to be performed. For example, the sensor 292 could be a strain gauge, a temperature sensing transducer, a pressure or vacuum sensing transducer, or a thermostat which senses both temperature and pressure. The sensor 292 could, for example, monitor oxygen content or hydrocarbon content of vapor within the fluid system.

It will be appreciated that the removable sensor housing 170 could be utilized for any suitable purpose, not necessarily only sensors that recognize and report system conditions. For example, these include leak detection devices, vapor shut-off devices, variable orifice or flow control devices, vapor purge devices, flow diversion devices, pulse dampeners, regulators, drains, manual shut off devices, bleed off ports and the like.

As mentioned, the sensor 292 can be a vapor or liquid fuel pressure sensor. It can be a differential pressure sensor or an absolute pressure sensor. Such sensors are readily available from Delphi World and North American Headquarters, 5725 Delphi Dr., Troy, Mich. 48098; Robert Bosch LLC, 38000 Hills Tech Drive, Farmington Hills, Mich. 48331; or Sensata Technologies, 529 Pleasant St., Attleboro, Mass. 02703. One such sensor is commonly known as an OBDII sensor and is useful in an automotive fuel or vapor system.

Non-powered or non-electrical devices could also be installed into the chamber 178 of the sensor housing 170. Such devices could include a mini-accumulator or pulse damper. Also contemplated for installation are a regulator with third port for return flow if no fuel pressure regulator is provided in the fuel tank, a bleed-off port for heavy-duty applications, such as recreational vehicles that include separate internal combustion engines for power generation, heaters and the like. The connector body with accessory housing could also contain other devices such as tank drains, manual shut-off or diversion valves, and numerous other devices. All of these and numerous other options are made available by the quick connector of the present invention.

As previously mentioned, the sensor housing 170 can be removably attached to the body 50 or another suitable structure. The removability of the sensor housing 170 permits the sensor housing 170 to be conveniently removed for maintenance or replacement. For example, when the sensor 292 in the sensor housing 170 malfunctions, it can be quickly and conveniently replaced with a functioning sensor housing. Similarly, as another example, the sensor housing 170 can be removed and replaced with another sensor housing to upgrade the sensor or utilize a different sensor type.

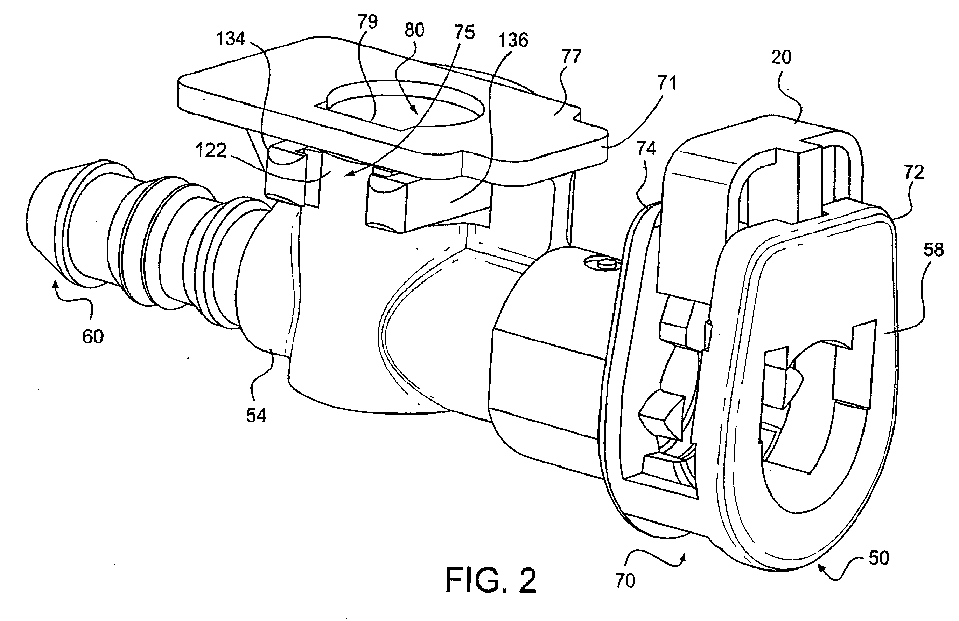

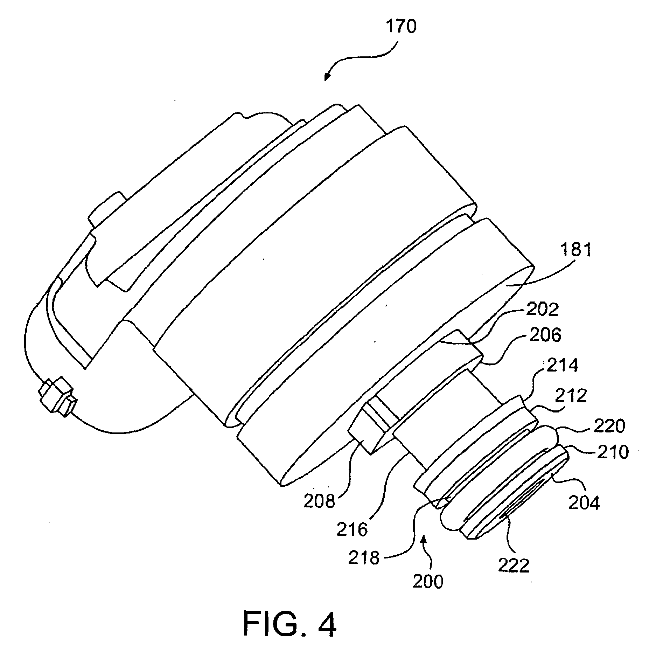

Accordingly, the sensor housing 170 can have a suitable structure for removable attachment to a corresponding mating portion on the body 50 or other suitable structure. Referring to FIGS. 3 and 4, the sensor housing 170 includes shaft 200 having a proximal end 202 and a distal end 204. The shaft 200 can include an asymmetric key portion 206 disposed near the proximal end 202. The key portion 206 can include a projection forming the asymmetric key portion 208. The projection 208 can be shaped to engage the counterbore 79 of the bore 80 best seen in FIG. 2.

An insertion end portion 210 is formed at the distal end 204. A fixed ring 212 can be disposed, or integrally formed, on the shaft 200 between the key portion 206 and the insertion end portion 210. The ring 212 may have an angled surface 214. A retainer groove 216 can be disposed between the keyed portion 206 and the ring 212, and a seal ring groove 218 can be disposed between the ring 212 and the cap 210. A seal, such as an 0-ring 220, can be disposed within the seal ring groove 218.

Passageway 222 passes through the shaft 200 to fluidly connect the fluid passageway portion 110 of the throughbore 56 connector body 50 to the passageway 182 of sensor housing 170 and chamber 178.

In order to secure the sensor housing 170 to the connector body 50, the connector body 50 Supports a removable sensor housing retainer 118 for engaging a corresponding portion of the sensor housing 170. For example, the illustrated connector body 50 has a sensor housing retainer portion 75, with side support members 76, 78 defining slots 106 and 108. As seen in FIG. 2 and 3, retainer housing portion 75 of connector body 50 further includes locking wall 122 defining locking Shoulders 118 and 120.

The removable sensor housing retainer 118 is releasably disposed in slots 106 and 108. The sensor housing retainer 118 can be any suitable shape and/or size such as U-shaped, as illustrated.

The sensor housing 170 is retained to the connector body 50 by inserting the shaft 200 into the bore 80 until the sensor housing retainer 118 engages the retainer groove 216 and the wall 180 is disposed against the planar support surface 77. When the sensor housing 170 is attached to the connector body 50, the 0-ring 220 forms a seal against the wall surface 73 defining the bore 80 to prevent leakage of fluid.

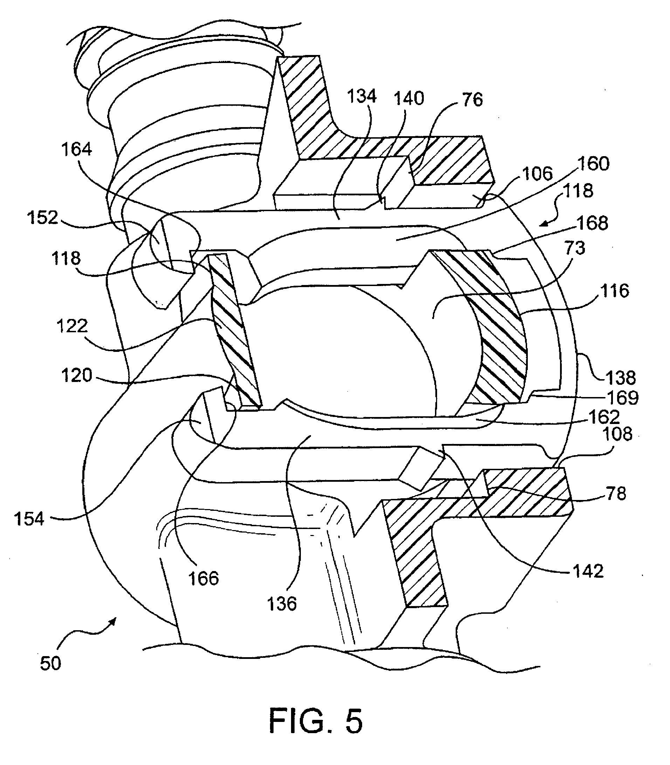

A suitable sensor housing retainer 118 is illustrated in detail in FIGS. 5-9. The sensor housing retainer 118 can be made of a rigid material, such as plastic sufficiently flexible for deformation during insertion. The sensor housing retainer 118, extends through slots 106 and 108, seen in FIG. 5 of the sensor housing, is demountably coupled to the connector body 50.

The sensor housing retainer 118 includes a pair of elongated, generally parallel legs 134, 136 extending from, and joined at one end by, a cross member 138. The cross member 138 provides a Separation between the legs 134, 136 approximately equal to the outer diameter of the retainer groove 216 in the shaft 200. Referring to FIG. 5, the legs 134, 136 have an axial width approximately equal to, but slightly less than (to allow clearance), the axial width of the slots 106, 108. The lateral width of the legs 134, 136 is significantly less than the lateral width of the slots 106, 108, in order to allow outward lateral deformation of the legs 134, 136 (to permit shaft 200 insertion and release).

Referring again to FIGS. 5-9, each leg 134, 136 includes a barb 140, 142 extending laterally outward from the laterally outer surface of the leg. Each barb 140, 142 is adapted to abut the corresponding side support member 76, 78 (as shown in FIG. 5) to resist radial outward movement of legs 134, 136 of the sensor housing retainer 118, from slots 106, 108 on insertion of shaft 200 into bore 80 as will be understood.

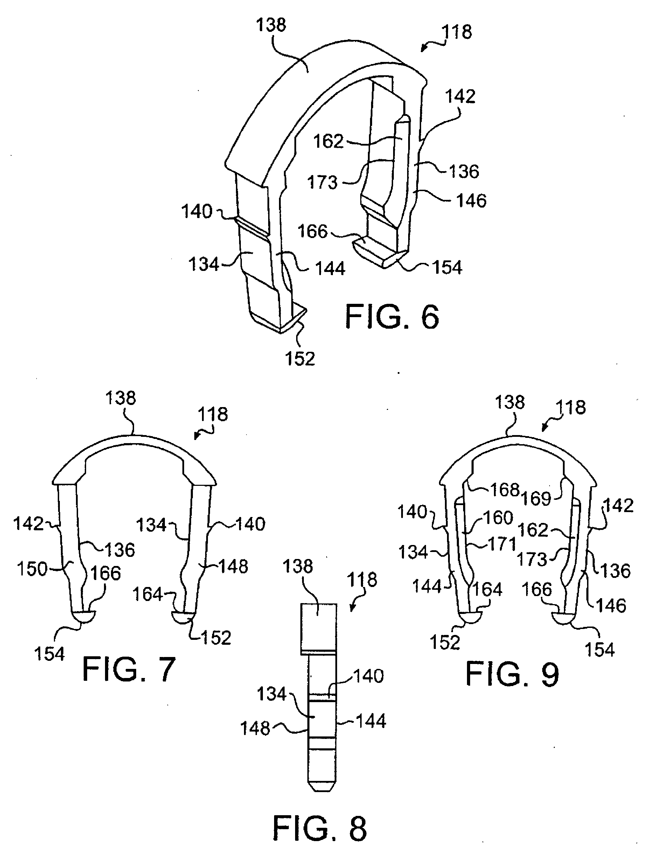

The cross member 138 has an axial width greater than that of the legs 134, 136. As illustrated in FIG. 8, the cross member 138 is axially aligned with the rear faces 144, 146 of the legs 134, 136, but extends axially beyond the front faces 148, 150 of the legs 134, 136.

Each leg 134, 136 includes a latch 152, 154 formed at an end remote from the cross member 138 and a sloping lead area 160, 162 formed on the rear face 144, 146 between the latch 152, 154 and the cross member 138. When the sensor housing retainer 118 is fully inserted into the connector body 50, the latches 152, 154 releasably affix the sensor housing retainer 118 into Position relative to the connector body 50. Latching edges 164, 166, defined by the latches 152, 154, engage the locking Shoulders 118, 120 on connector body retainer portion 75 to hold the sensor housing retainer 118 in place. At the same time, the barbs 140, 142 defined on the laterally outer surfaces of the legs 134, 136 are situated immediately below the side support members 76, 78 in abutting relationship with the side support members to prevent radially outward movement of the sensor housing retainer 118 when legs 134, 136 are spread apart sufficiently to disengage latches 152, 154 from locking shoulders 118, 120 of locking wall 122.

Ramped or camming surfaces 168, 169 are formed on the laterally inner surface of each leg 134, 136, just below the cross member 138. When assembled, the ramped surfaces 168, 169 rest just above the curved outer surface 116 of the connector body 50. If pressure is applied to the cross member 138 to press the primary sensor housing retainer 118 further into the connector body 50, the ramped surfaces 168, 169 contact and slide or cam against the curved outer surface 116. Consequently, the legs 134, 136 spread apart, allowing release of the shaft 200.

The lead areas 160, 162 slope radially and axially inward from the rear face 144, 146 of each leg 134, 136, and terminate between the rear face 144, 146 and the front face 148, 150. The spacing between the lead areas 160, 162 is at its greatest adjacent the rear face 144, 146. Here, the spacing is approximately equal to the diameter of the ring 212 on the shaft 200. At the front edges 172, 174 of the lead areas 160, 162, the spacing between the lead areas 160, 162 is approximately equal to the retainer groove 216 of the shaft 200. The portions of the lead areas 160, 162 closer to the latches 152, 154 curve inwardly to match the annular profile of the shaft 200. This assists in guidance and centering of the shaft through the connector body 50.

To assemble the sensor housing 170 to the connector body 50, the sensor housing retainer 118 may first be attached to the connector body 50. The legs 134, 136 of the sensor housing retainer 118 can be inserted through the slots 106, 108 with the sensor housing retainer 118 oriented such that the lead areas 160, 162 of the legs 134, 136 face toward the entrance to the sensor bore 80 at planar support surface 77 of the connector body 50.

Insertion of the legs 134, 136 through the slots 106, 108 is facilitated by applying a force toward the connector body 50 on the cross member 138. An increase in force is necessary when the legs 134, 136 contact the sides of locking wall 122. Applying sufficient force, the rounded ends of the legs 134, 136 slide against the locking wall 122, spreading the legs 134,136 apart and allowing the latching edges 164, 166 of latches 152,154 on legs 134, 136 to pass by the locking shoulders 118, 120 of locking wall 122. When the edges 164, 166 of legs clear the locking wall 122, the legs 134, 136 spring laterally inward with the latching edges 164, 166 positioned under the locking shoulders 118, 120 to secure the sensor housing retainer 118 to the connector body 50.

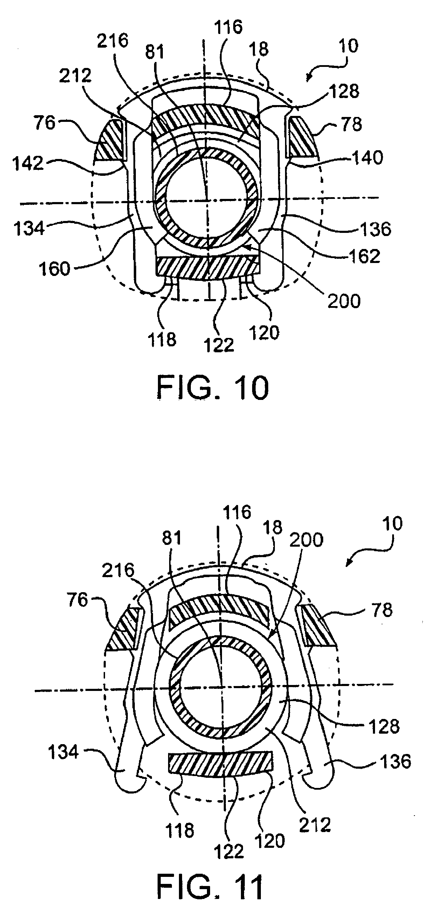

A properly attached sensor housing retainer 118 is illustrated in FIGS. 5 and 10. In the attached position, the legs 134,136 of the sensor housing retainer 118 are approximately perpendicular to the longitudinal extent of the bore 80.

The sensor housing 170 is attached to the connector body 50 by inserting the shaft 200 into the bore 80 as illustrated in FIG. 3. During insertion, as the insertion end portion 210 contacts the sloping lead areas 160, 162, the legs 134, 136 begin to flex laterally outward. As shown in FIG. 11, the legs 134, 136 continue to be spread apart as the 0-ring 220 and ring 212 pass by the legs 134, 136. Turning to FIG. 10, the legs 134, 136 spring back into place within the retainer groove 216 after passing the ring 212 and angled surface 214. As the legs 134,136 spring back into place, an audible click is produced to provide verification that the legs 134,136 are in the locked position.

With the shaft portion 200 of sensor housing 170 completely inserted into bore 80 of connector body 50 planar mating surface 181 is disposed in face-to-face contact with planar support surface 77 of connector body 50. Asymmetric key portion 206 of shaft 200 is positioned within asymmetric counterbore 79 of bore 80 to maintain a fixed orientation between the sensor housing 170 and connector body 50.

Shaft 200 is disposed in bore 80. 0-ring seal 220 is disposed in seal ring groove 218 in fluid tight sealing relation to shaft 200 and cylindrical surface 73 of cylindrical bore 80. Passageway 222 of shaft 200 provides a fluid path between fluid passageway 110 of throughbore 56 and passageway 182 in wall 180 to place the chamber 178 in fluid communication with the fluid in fluid passageway portion 110 of throughbore 56.

Release of the shaft 200 from a locked position can be achieved by exerting a force on the cross member 138 of sensor housing retainer 118. The force on the cross member 138 causes the ramped surfaces 168, 169 to contact the curved outer surface 116 of the connector body 50. The ramped surfaces 168, 169 slide or cam against the curved outer surface 116, causing the legs 134, 136 to spread apart lateral I y as application of the force continues. Eventually, the legs 134, 136 will be spread apart a distance sufficient to allow passage of the ring 212 between the legs 134, 136. The sensor housing 170 may then be withdrawn from the connector body 50. Upon withdrawal of the sensor housing 170 from the connector body 50 and relaxation of sensor housing retainer 118, the sensor housing retainer 118 returns to its normal unstressed position.

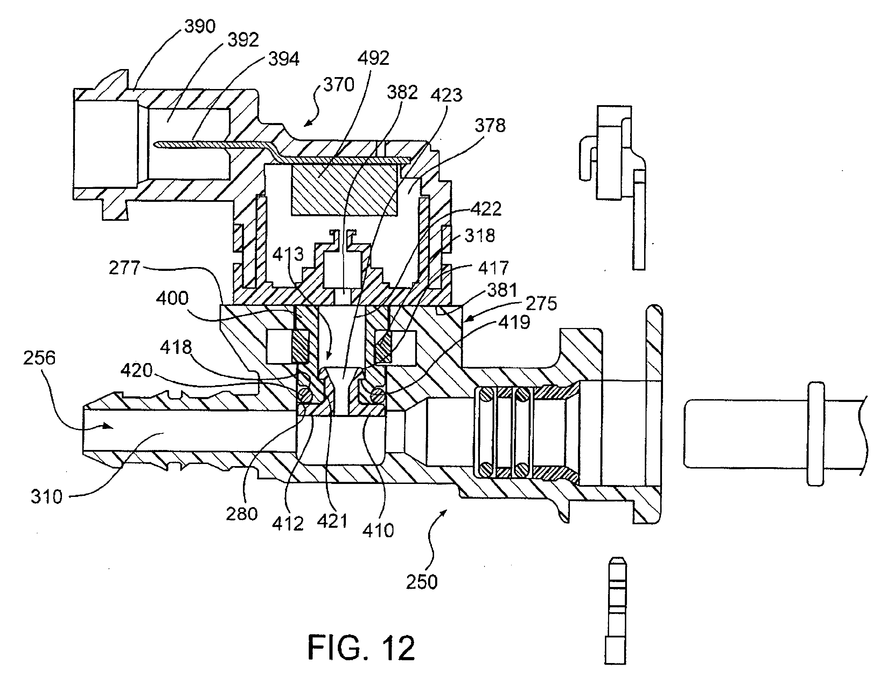

FIG. 12 shows another embodiment of a connector body 250 with a removable sensor housing 370. It may house a sensor 492 connected to prongs 394 extending into plug receiving Chamber 392 defined by plug receptacle wall 390.

The connector body 250 and removable sensor housing 370 can be configured generally as described above with respect to FIGS. 1-11 and provide the full advantages of the present disclosure.

Connector body 250 includes a throughbore 256 defining a fluid passage 310. Connector body 250 includes a sensor housing retainer portion 275 with a wall defining a planar support surface 277 and a bore 280. It releasably receives a sensor housing retainer 318.

Sensor housing 370 includes shaft 400 defining throughbore 422 in fluid communication with a sensor chamber 378 through passageway 382 . Shaft 400 depends from planar mating surface 381 which rests on planar support surface 277 of connector body 250. However, in this embodiment the insertion end portion 410 of shaft 400 is manufactured as a separate attachable component. The insertion end portion 410 can have a head portion 412 that helps to form a seal ring groove 418 for receiving an 0-ring 420 on a shaft 400. The insertion end portion 410 can include a connector portion 413 having a sloped leading edge 417 and a retaining edge 419. The passageway 422 of shaft 400 can include a reduced diameter portion 421. The insertion end portion 410 can be attached to the shaft 400 of sensor housing 370 by inserting the connector portion 413 into the reduced diameter portion 421. The sloped leading edge 417 contacts the reduced diameter portion 421 and flexes inward. As the connector portion 413 moves past the reduced diameter portion 421, the connector portion 413 expands outward such that the retaining edge 419 contacts the reduced diameter portion 421 to hold the insertion end portion 410 in place. Insertion end portion includes a central throughbore 423 to provide fluid communication to fluid passageway 310 of connector body 250.

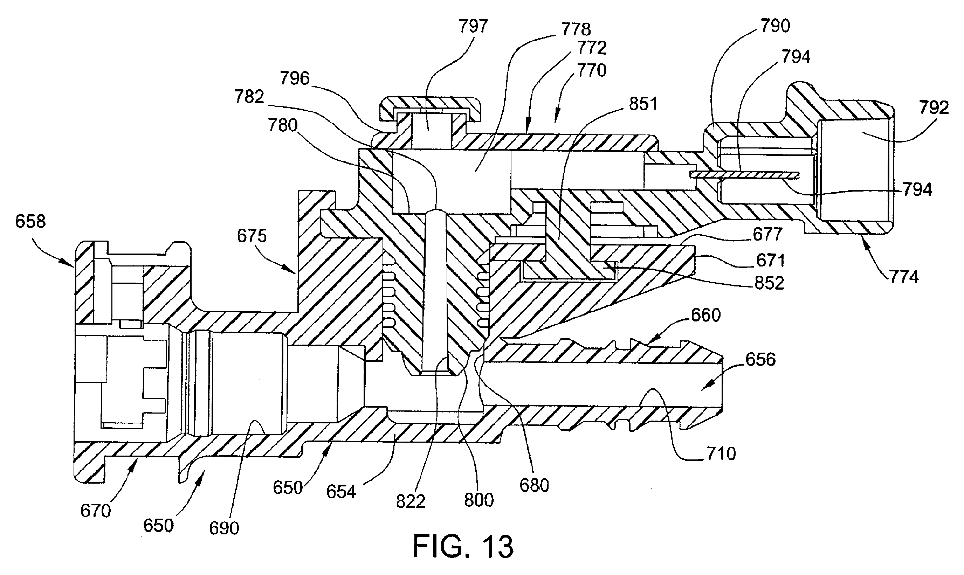

FIGS. 13 through 16 shows another embodiment of an exemplary connector body 650 with a removable sensor housing 770. The connector body 650 and removable sensor housing 770 can be configured generally as described above with respect to FIGS. 1-11 and provide the full advantages of the present disclosure. They are, however, connected together in a somewhat modified arrangement.

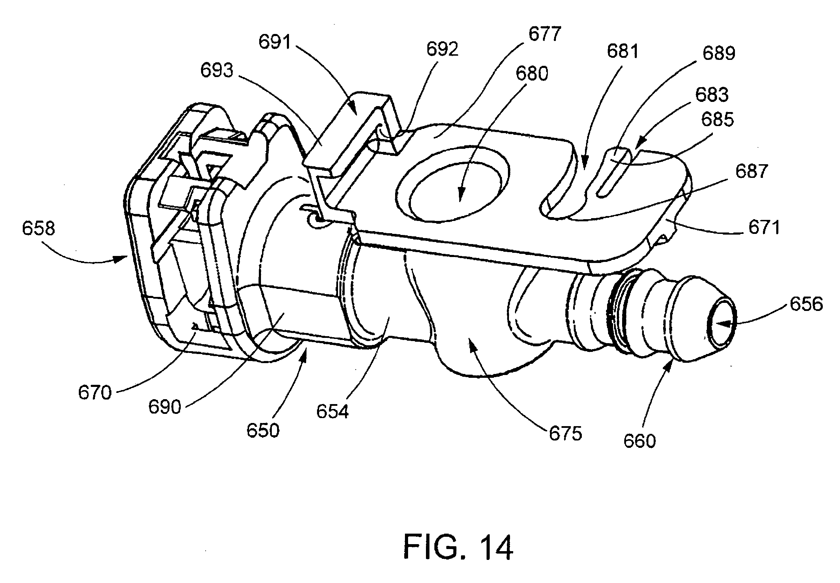

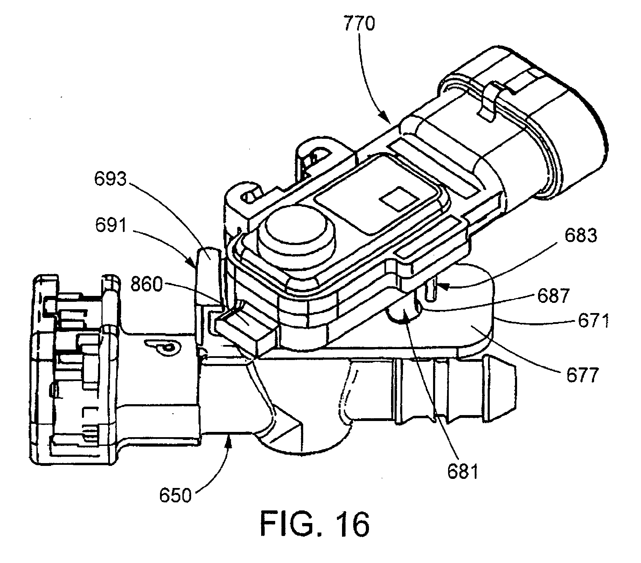

In this regard, connector body 650 is similar to connector body 50 of the embodiment of FIGS. 1 to 11 and functions in the same manner within a fluid system. It includes a wall 654 extending from a male member reception end 658 to stem end 660. It defines a throughbore 656 forming fluid passage 710, seal receiving portion 690 and retainer housing section 670. Connector body 650 includes a sensor housing retainer portion 675 with a wall 671 defining planar support surface 677. A bore 680 in communication with fluid passage 710 best seen in FIGS. 14 and 16 extends from planar support surface 677.

As seen in FIG. 14, wall 671 defining planar support surface 677 includes slots 681 and 683 forming lever 685. The slot 681 is arcuate and terminates at a generally cylindrical closed end 687. Notably, the lever 685 has a free or distal end 689 spaced from the opposite surface of the slot that is closer than the maximum diameter of closed end 687 of slot 681. Slot 683 is not arcuate but rather formed generally perpendicular to the longitudinal edge of planar support surface 677.

Planar support surface 677 further includes a latch wall 691 defining abutment portion 692 and retaining portion 693.

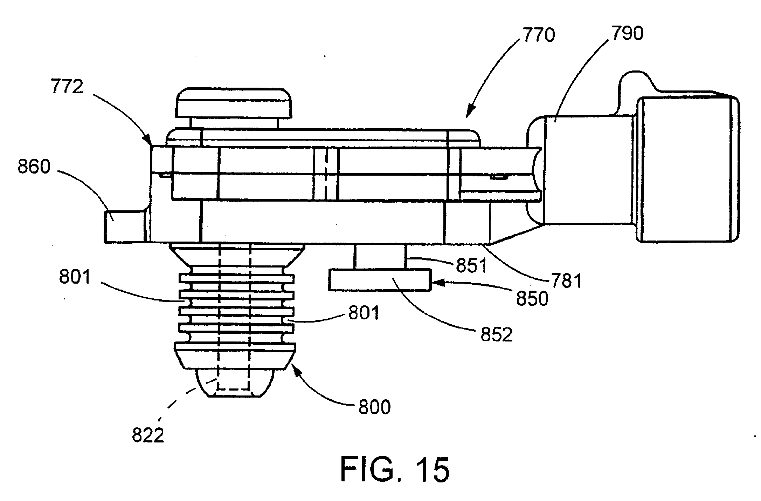

Sensor housing 770 seen in FIGS. 13 and 15 includes shaft 800 defining throughbore 822 in fluid communication with a sensor chamber 778 through passageway 782.

Shaft 800 depends from planar mating surface 781 which is intended to rest on planar support surface 677 of connector body 650. The exterior surface of shaft 800 includes a plurality of reliefs 801 defining a labyrinth to seal with bore 680.

Sensor housing 770 includes a sensor cavity defining portion 772 and a receptacle portion 774. As shown, in the drawings, FIGS 13 to 16, the receptacle portion 774 can be disposed generally parallel to the longitudinal axis of the throughbore 656 defined by wall 654 of body 650.

As shown in FIG. 13, the cavity defining portion 772 of sensor housing 770 defines an accessory chamber 778 to receive a sensor or other device, as previously discussed. Cavity defining portion 772 includes a bottom wall 780 defining planar mating surface 781 from which depends the cylindrical shaft 800 defining passageway 822. Bottom wall 780 includes a bore or passageway 782 in communication with throughbore 656 of connector body 650 through passageway 822 of shaft 800. The chamber 778 is thus in fluid communication with the fluid within fluid passageway 710 of throughbore 656 of connector body 650.

Receptacle portion 774 of sensor housing 770 includes wall 790 extending from the cavity defining portion 772 of housing 770. Wall 790 defines a hollow plug receiving Chamber 792. Electrically conductive prongs or blades 794 are imbedded in the wall 790 in fluid tight relation and extend into chamber 778. The ends of the prongs 794 can be exposed within chamber 778 and include contacts for contacting the circuitry of a sensor or other device.

As best seen in FIG. 13, wall 796 can include a port 797 that communicates between the surrounding atmosphere and the interior of chamber 778. This port 797 can provide access to a reference source of surrounding ambient atmosphere. A sensor disposed in the chamber 778 can thus provide a comparative signal based on the difference between the condition sensed in the fluid system and the corresponding parameter in the surrounding atmosphere. The port 797 can be isolated from the port 782 to retain the fluid tight integrity of the fluid in the fluid passageway portion 710 of throughbore 656 of the connector body 650 as explained in connection with the embodiment of FIGS. 1 to 11.

As best seen in FIG. 15, the removable sensor housing 770 of the embodiment of FIG. 13 to 16 includes a latch pin 850 depending from planar mating surface 781 parallel to cylindrical shaft 800. It includes a pin shank 851 and an enlarged head 852. The pin 850 is disposed such that with cylindrical shaft 800 fully disposed within bore 680 shank 851 may be positioned in slot 681 by rotation of the sensor housing 770 about the axis of bore 680 and shaft 800. The enlarged head 852 is captured below the wall 671 defining planar support surface 677 at enlarged end 687 of slot 681. Head 852 is larger than the diameter of enlarged end 687. On rotation of the latch pin 850 into slot 681 lever 685 is deformed somewhat toward slot 683 to permit passage of pin shank 851. With the shank 851 disposed in enlarged end 687 the lever 685 returns to its undeformed shape and releasably retains the pin 850 in place. Head 852 is captured below wall 671.

Sensor housing 770 also includes a tab 860 at an end remote from plug receiving chamber 792. Tab 860 is configured to engage within latch wall 691 on rotation of the sensor housing 770 with position latch pin 850 within enlarged end 687 of slot 681. Tab 860 abuts abutment portion 692 of latch wall 691 to limit rotational movement of the sensor housing 770 relative to the connector body 650. Retaining portion 693 prevents movement of sensor housing planar mating surface 781 away from planar support surface 677 to retain shaft 800 within bore 680. The enlarged head 852 of latch pin 850 also opposes such separation.

FIG. 16 depicts the manner of connection of the sensor housing 770 to the connector body 650. The shaft 800 is fully inserted into bore 680 until planar mating surface 781 abuts planar support surface 677. The sensor housing 770 is rotated about the axis of shaft 800 and bore 680 to engage latch pin 850 with slot 681 and engage tab 860 with latch wall 691. The labyrinth shape of the reliefs 801 on shaft 800 provide a fluid tight seal between the shaft 800 and bore 680. Should it be found desirable, one or more 0-ring seals may be disposed in relief 801 to augment the sealing function.

It will be appreciated that, although the sensor housing has been described as removably attaching to a quick connector, the sensor housing can be removably connected to any suitable structure with a corresponding receptacle configuration.

Various features of the present invention have been described with reference to the above illustrative embodiments. It should be understood that modifications may be made without departing from the spirit and scope of the invention.

## Claims

1. A quick connector comprising:
a connector body (50), the connector body (50) including a throughbore (56) defining a fluid passageway (110) extending from a male member reception end (58),
said connector body (50) including a wall (71) defining a planar support surface (77) to receive a sensor housing (170), and defining a bore (80) extending from said planar support surface (77) in fluid communication with said fluid passageway (110) of said throughbore (56),
wherein said connector body (50) defines a sensor housing retainer portion (75) to receive a sensor housing retainer (118); and the sensor housing retainer (118) disposed in said sensor housing retainer portion (75) configured to retain the sensor housing (170) to the connector body (50), said retainer (118) being generally U-shaped with spaced legs (134, 136), and a cross member (138) connecting said legs (134, 136),
wherein said sensor housing retainer portion (75) of said connector body (50) further comprises slots (106, 108) configured to releasably receive said legs (134, 136), and a locking wall (122) configured releasably to retain said sensor housing retainer (118) in said sensor housing retainer portion (75),
wherein said legs (134, 136) each include a latch (152, 154) with a latching edge (164, 166) for contacting said locking wall (122) and each of said legs (134, 136) include a sloping lead area (160, 162) facing toward said planar support surface end of said bore (80),
further comprising the sensor housing (170) removably coupled to the connector body (50) with said sensor housing retainer (118), and wherein the sensor housing (170) includes a shaft (200), including a retainer groove (216), said shaft (200) being disposed within said bore (80) such that said legs (134, 136) of said sensor housing retainer (118) engage said groove (216) to releasably couple the sensor housing (170) to the connector body.

2. A quick connector as claimed in claim 1 wherein said bore (80) in said connector body (50) includes an asymmetrical counterbore (79), and said shaft (200) of said sensor housing (170) includes an asymmetrical projection (206) engaged with said asymmetrical counterbore (79) of said connector housing body (50) to fix the relative position of said sensor housing (170) relative to said connector body (50).

3. A quick connector as claimed in claim 1 said wall including a slot (681, 683) spaced from said bore (80) extending from said planar support surface (77).

4. A quick connector as claimed in claim 1 said quick connector further including a sensor housing (170) removably coupled to said quick connector body (50) comprising:
a cavity defining portion (172) defining a chamber (178);
a wall (180) of said cavity defining portion (172) including a passageway (182) to said chamber (178);
a shaft (200) extending from said wall (180), defining a passageway (222) in fluid connection with said passageway (182) in said wall (180) of said cavity defining portion (172);
said wall (180) of said sensor housing (170) defining a planar mating surface (181) with said shaft (200) extending therefrom;
said planar mating surface (181) including a latch pin (850) extending therefrom engaging said slot (861);
said planar support surface (77) of said body (50) supporting said planar mating surface (181) of said sensor housing (170).

5. A quick connector as claimed in claim 4 wherein said connector body (50) includes a latch wall (691) and said sensor housing (170) including a tab (680) engaging said latch wall (691).

## Patentansprüche

1. Schnellverbinder, aufweisend:
ein Verbindergehäuse (50), wobei das Verbindergehäuse (50) eine Durchgangsbohrung (56) aufweist, die einen Fluiddurchgang (110) definiert, der sich von einem Aufnahmeende eines Einsteckelements (58) aus erstreckt,
wobei das Verbindergehäuse (50) eine Wand (71) aufweist, die eine ebene Stützfläche (77) aufweist, um ein Sensorgehäuse (170) aufzunehmen, und die eine Durchgangsbohrung (80) aufweist, die sich von der ebenen Stützfläche (77) aus erstreckt und in Fluidkommunikation mit dem Fluiddurchgang (110) der Durchgangsbohrung (56) steht,
wobei das Verbindergehäuse (50) einen Sensorgehäuse-Halterteil (75) zum Aufnehmen eines Sensorgehäusehalters (118) aufweist; und der im Sensorgehäuse-Halterteil (75) angeordnete Sensorgehäusehalter (118) für ein Halten des Sensorgehäuses (170) am Verbindergehäuse (50) konfiguriert ist, wobei der Halter (118) im Wesentlichen u-förmig mit beabstandeten Schenkeln (134, 136) und einem die Schenkel (134, 136) miteinander verbindendem Querelement (138) ausgeführt ist,
wobei der Sensorgehäuse-Halterteil (75) des Verbindergehäuses (50) ferner Schlitze (106, 108) aufweist, die für ein lösbares Aufnehmen der Schenkel (134, 136) konfiguriert sind, und eine Verschlusswand (122), die für ein lösbares Halten des Sensorgehäusehalters (118) im Sensorgehäuse-Halterteil (75) konfiguriert ist,
wobei die Schenkel (134, 136) jeweils eine Verriegelung (152, 154) mit einer Verriegelungskante (164, 166) für Kontakt mit der Verschlusswand (122) aufweisen und jeder Schenkel (134, 136) eine geneigte Leitfläche (160, 182) aufweist, die gegen das Ende der ebenen Stützfläche der Durchgangsbohrung (80) gerichtet ist, aufweist,
ferner aufweisend das Sensorgehäuse (170), das lösbar zum Verbindergehäuse (50) mit der Sensorgehäuse-Halterung (118) verbunden ist, und wobei das Sensorgehäuse (170) einen Schaft (200) enthält, der eine Halterungsnut (216) aufweist, wobei der Schaft (200) so innerhalb der Durchgangsbohrung (80) angeordnet ist, dass die Schenkel (134, 136) der Sensorgehäuse-Halterung (118) mit der Nut (216) im Eingriff sind, um das Sensorgehäuse (170) lösbar mit dem Sensorgehäuse zu verbinden.

2. Schnellverbinder nach Anspruch 1, wobei die Durchgangsbohrung (80) im Verbindergehäuse (50) eine asymmetrische Gegenbohrung (79) aufweist und der Schaft (200) des Sensorgehäuses (170) einen asymmetrischen Vorsprung (206) aufweist, der mit der asymmetrischen Gegenbohrung (79) des Verbindergehäuses (50) im Eingriff steht, um die relative Position des Sensorgehäuses (170) zum Verbindergehäuse (50) zu sichern.

3. Schnellverbinder nach Anspruch 1, wobei die Wand einen von der Bohrung (80) beabstandeten, sich von der ebenen Stützfläche (77) aus erstreckenden Schlitz (681, 683) aufweist.

4. Schnellverbinder nach Anspruch 1, wobei der Schnellverbinder ferner ein lösbar mit dem Schnellverbindergehäuse (50) verbundenes Sensorgehäuse (170) aufweist, das Folgendes aufweist:
einen Hohlraum definierenden Teil (172), der eine Kammer (178) definiert;
eine einen Durchgang (182) zur Kammer (178) aufweisende Wand (180) des einen Hohlraum definierenden Teils (172);
einen, sich von der Wand (180) aus erstreckende, einen in Fluidverbindung mit dem Durchgang (182) in der Wand (180) des einen Hohlraum definierenden Teils (172) stehenden, definierenden Durchgang (222), Schaft (200);
wobei die Wand (180) des Sensorgehäuses (170) eine ebene Paarungsfläche (181) zu dem sich von dort aus erstreckenden Schaft (200) definiert;
wobei die ebene Paarungsfläche (181) einen sich von dort aus erstreckenden, mit dem Schlitz (861) im Eingriff stehenden Verriegelungsstift (850) aufweist;
wobei die ebene Stützfläche (77) des Gehäuses (50) die ebene Paarungsfläche (181) des Sensorgehäuses (170) abstützt.

5. Schnellverbinder nach Anspruch 4, wobei das Verbindergehäuse (50) eine Verriegelungswand (691) aufweist und das Sensorgehäuse (170) einen mit der Verriegelungswand (680) im Eingriff stehenden Reiter (680) aufweist.

## Revendications

1. Connecteur rapide comprenant :
un corps de connecteur (50), le corps de connecteur (50) comprenant un alésage traversant (56) définissant un passage de fluide (110) s'étendant d'une extrémité de réception d'élément mâle (58),
le corps de connecteur (50) comprenant une paroi (71) définissant une surface de support planaire (77) pour recevoir un boîtier de capteur (170), et définissant un alésage (80) s'étendant de la surface de support planaire (77) en communication fluidique avec le passage de fluide (110) de l'alésage traversant (56),
dans lequel le corps de connecteur (50) définit une partie de fixation de boîtier de capteur (75) pour recevoir une fixation de boîtier de capteur (118) ; et la fixation de boîtier de capteur (118) disposée dans la partie de fixation de boîtier de capteur (75) est configurée pour fixer le boîtier de capteur (170) au corps de connecteur (50), la fixation (118) étant généralement en forme de U avec des branches espacées (134, 136), et un élément transversal (138) reliant les branches (134, 136),
dans lequel la partie de fixation de boîtier de capteur (75) du corps de connecteur (50) comprend en outre des fentes (106, 108) configurées pour recevoir de façon libérable les branches (134, 136), et une paroi de blocage (122) configurée de façon libérable pour fixer la fixation de boîtier de capteur (118) dans la partie de fixation de boîtier de capteur (75),
dans lequel les branches (134, 136) comprennent chacune un verrou (152, 154) avec un bord de verrouillage (164, 166) pour mettre en contact la paroi de blocage (122) et chacune des branches (134, 136) comprend une zone avant inclinée (160, 162) faisant face à l'extrémité de surface de support planaire de l'alésage (80),
comprenant en outre le boîtier de capteur (170) couplé de façon amovible au corps de connecteur (50) avec la fixation de boîtier de capteur (118), et dans lequel le boîtier de capteur (170) comprend une tige (200), comprenant une rainure de fixation (216), la tige (200) étant disposée à l'intérieur de l'alésage (80) de telle façon que les branches (134, 136) de la fixation de boîtier de capteur (118) mettent en prise la rainure (216) pour coupler le boîtier de capteur (170) au corps de connecteur de façon libérable.

2. Connecteur rapide selon la revendication 1, dans lequel l'alésage (80) dans le corps de connecteur (50) comprend un contre-alésage asymétrique (79), et la tige (200) du boîtier de capteur (170) comprend une saillie asymétrique (206) mise en prise avec le contre-alésage asymétrique (79) du corps de boîtier de connecteur (50) pour fixer la position relative du boîtier de capteur (170) par rapport au corps de connecteur (50).

3. Connecteur rapide selon la revendication 1, la paroi comprenant une fente (681, 683) espacée de l'alésage (80) s'étendant de la surface de support planaire (77).

4. Connecteur rapide selon la revendication 1, le connecteur rapide comprenant en outre un boîtier de capteur (170) couplé de façon amovible au corps de connecteur rapide (50) comprenant :
une partie définissant une cavité (172) définissant une chambre (178) ;
une paroi (180) de la partie définissant une cavité (172) comprenant un passage (182) vers la chambre (178) ;
une tige (200) s'étendant de la paroi (180) définissant un passage (222) en connexion fluidique avec le passage (182) dans la paroi (180) de la partie définissant une cavité (172) ;
la paroi (180) du boîtier de capteur (170) définissant une surface planaire d'accouplement (181) avec la tige (200) s'étendant depuis celle-ci ;
la surface planaire d'accouplement (181) comprenant une broche de verrouillage (850) s'étendant depuis celle-ci en mettant en prise la fente (861);
la surface de support planaire (77) du corps de connecteur (50) supportant la surface planaire d'accouplement (181) du boîtier de capteur (170).

5. Connecteur rapide selon la revendication 4, dans lequel le corps de connecteur (50) comprend une paroi de verrouillage (691) et le boîtier de capteur (170) comprenant un taquet (680) mettant en prise la paroi de verrouillage (691).
